# EUROPEAN PATENT APPLICATION

(11) **EP 4 781 835 A1**
(43) Date of publication of application: **29.07.2026**
(21) Application number: 23952950.6
(22) Date of filing: 22.09.2023
(51) Int. Cl.: A23J 3/26, A23P 20/00

(54) **FOOD PRODUCT, METHOD AND SYSTEM FOR PREPARING THE FOOD PRODUCT**

(71) Applicant: Cocuus System Iberica, S.L., 31190 Cizur Menor (Navarra) (ES)
(72) Inventor: LARUMBE BERAMENDI, Francisco Javier, 31190 CIZUR MENOR (NAVARRA) (ES); RICO ALDAZ, Daniel, 31190 CIZUR MENOR (NAVARRA) (ES); ZARATIEGUI FERNANDEZ, Javier Ignacio, 31190 CIZUR MENOR (NAVARRA) (ES); ARBELOA RONCO, Miguel, 31190 CIZUR MENOR (NAVARRA) (ES)
(74) Representative: Veiga Serrano, Mikel
(86) International application number: PCT/ES2023/070568
(87) International publication number: WO 2025/062049

(57) **Abstract**

The present invention relates to a food product characterised in that it comprises a substantially parallelepiped multilayer body, formed by two opposing bases with a length, **L,** and a width, A, and four side walls in opposing pairs and with a height, h, wherein the height, h, is less than the width, A. According to the invention, the multilayer body comprises at least one layer of meat solution and at least one layer of fat solution, the at least one layer of meat solution and the at least one layer of fat solution alternating from bottom to top along the height, h, and having a variable thickness along the body of the food product, the body, once compacted and aged, being able to be laminated perpendicularly to the arrangement of the layers. The invention also relates to a method and system for obtaining and producing the food product.

## Description

### Field of the art

The present invention falls within the field of food. Specifically, it relates to a method and system for producing a food preparation simulating a meat product, specifically, bacon.

### State of the art

The world's demand for food is reaching unprecedented levels. Specifically, it is estimated that by 2050 the demand for meat and fish will have doubled compared to today. This poses a major challenge for the production of sufficient food.

Current livestock for food production such as cattle, sheep, poultry and fish requires a lot of natural resources, such as available water or land. It is definitely not sustainable from an ecological point of view, and will not be able to meet the future requirements of an exponentially growing population.

Therefore, at the same time, part of the food industry has embarked on research and the search for new alternative food sources, specifically protein to replace animal protein, which are easy to produce much more efficiently.

It is in this context that the development of ingredients for the manufacture thereof, its subsequent texturisation, flavouring and assembly at the point of consumption, may be the most appropriate solution.

From this idea, research and the nascent industry of additive manufacturing food systems, for example, through 3D printing, emerged.

Currently, the production processes of a food preparation simulating a meat product are known.

These additive manufacturing processes include solutions for the production of bacon, including its vegan version, in other words, no animal-derived raw materials.

Among these processes, processes comprising the preparation of a first mixture, the meat simulation part, and a second mixture, the fat simulation part, and the subsequent placement thereof in a layered mould to form a structure similar in shape to the structure of animal bacon can be highlighted.

However, these processes present a homogeneous stratified result, which results in a visually unnatural appearance, as the different layers have almost the same thickness along the length of the bacon strip.

This unnatural aspect is a major drawback for the final consumer's acceptance of the food preparation.

A solution that provides a food preparation that simulates a meat product with a natural appearance, which maintains the sensations produced in a consumer by bacon: taste, flavouring, appearance etc., is therefore desirable, thus avoiding the drawbacks of current solutions in the state of the art.

### Object of the invention

The object of the present invention is to provide a solution concerning the development of a food product simulating a meat product, which allows to maintain the perception of a consumer by solving the aforementioned drawbacks.

In a first aspect of the invention, a food product simulating a meat product, preferably, bacon, is disclosed.

Said food product comprises a substantially parallelepiped-shaped multilayer body. two opposing bases can thus be defined, facing each other, with a length, L and width, A, and four side walls, in opposing pairs, with a height, h, wherein the height, h, is less than the width, A; wherein said multilayer body comprises at least one layer of meat solution and at least one layer of fat solution, the at least one layer of meat solution and the at least one layer of fat solution alternating from bottom to top along the height, h, and each layer having a variable thickness along the body of the food product, and wherein said body, once compacted and aged, is able to be laminated perpendicularly to the arrangement of said layers.

In a second aspect, the invention relates to a method for preparing a food product comprising the following steps:
a) arranging a substantially parallelepiped-shaped mould with a base having a length, L, and a width, A,
b) depositing a longitudinally variable thickness of at least one layer of meat solution and at least one layer of fat solution alternating from bottom to top along the height, h, partially or wholly occupying an area having a length, L, and width, A, of the mould;
c) compacting the layered assembly into a multilayer body;
d) ageing the multilayer body obtained by cooling the multilayer body, at a temperature between 2 - 8 °C for 8 - 24 hours, gelling a food product having a laminable multilayer body.

In a third aspect, the invention relates to a system for preparing a food product comprising a feeding means configured to receive and pour a raw material onto a substantially parallelepiped mould with a base having a length, L, and a width, A, which comprises:
- A first hopper configured to receive and pour a meat solution, and
- A second hopper configured to receive and pour a fat solution.

The system further comprises a cooling means configured to gel a multilayer body deposited in a substantially parallelepiped mould with a base having a length, L, and a width, A.

In this regard, due to the solutions described in the present invention, a food product with characteristics superior to those existing in the state of the art can be obtained. Said product has a better appearance, as there is a greater lack of uniformity between the product layers, giving the same a more natural look, therefore solving the existing drawbacks in the current state of the art of food products simulating meat products.

### Description of the figures

Figure 1 shows an embodiment of the food product, specifically, a food product simulating a block of bacon.
Figure 2 shows a diagram of an embodiment of said bacon comprising three layers of meat solution and two layers of fat solution, in use, after being laminated and fried.
Figure 3 shows a system for preparing a food product.
Figure 4 shows an embodiment of a layer mixer.

### Detailed description of the invention

In a first aspect of the invention, a food product simulating a meat product, preferably, bacon, is disclosed.

This food product is a product comprising two components: a first component or meat layer (1) and a second component or fat layer (2). Each of these components may be arranged in one or more layers alternating with the other component.

The food product, according to the present invention, comprises a body (4) dimensioned with a length, L, a width, A, and a height, h, consisting of a set of layers (1, 2) having a variable thickness, consisting of at least one layer of meat solution (1) and at least one layer of fat solution (2).

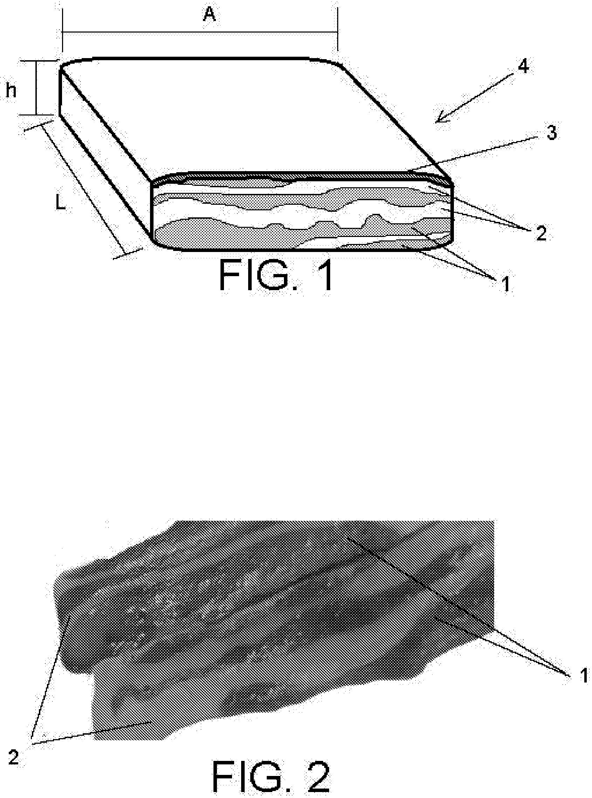

The arrangement of the layers of each solution is carried out along the length, L, and width, A, of the body (4). In contrast to other solutions known in the state of the art, the at least one layer of meat solution (1) and the at least one layer of fat solution (2) have a variable height or thickness along the layer as shown in Figure 1.

As shown in Figure 1, the food product is able to be laminated, once aged and compacted, resulting in a slice, along the length of the body, L, of the perpendicular plane to the arrangement of the set of layers (1, 2, 3). The height of the body, h, is a dimension smaller than the width, A, so that when the body is sliced it produces an elongated slice. As can be seen in Figure 2, the result of the food product obtained is equivalent to the actual appearance of bacon slices.

The lack of homogenisation of the thickness of the layers (1, 2) gives a natural appearance to the resulting slice, which is a great advantage over the alternatives currently available.

Additionally, the food product may have a multilayer body with mixed layers (1, 2). In other words, the meat and fat layers of the body, are altered along the body, heterogeneously, so that the laminated appearance of the body is irregular, favouring a more natural look.

In a preferred embodiment, the meat solution may be of animal origin. However, such a meat solution may also have an alternative, preferably plant, origin, which are obtained, for example, from pea protein.

In a more preferred embodiment, the meat solution of animal origin, preferably, selected from the group consisting of pigs, sheep, cattle and poultry, has a composition comprising the following formulation with percentages by weight:
- Animal meat: 70 - 80%
- Water: 20 - 30%
- Binder, preferably, transglutaminase: 2 - 3%
- Natural flavouring: 0.5 - 1%

For the production of this meat solution, the water must be emulsified together with the binder, preferably, transglutaminase. Next, pork, preferably pork tenderloin, is laminated, or ground, and the pork slice is impregnated with the water-binder emulsion.

As an alternative to the meat solution of animal origin, the meat solution may be of alternative origin, preferably, of plant origin. This alternative origin is an option for not using livestock meat, the generation and development of which currently has significant limitations.

In this embodiment, the composition of this meat solution would be:
- Source of protein, preferably, pea protein powder: 2 - 4%
- Flour, preferably, glutinous rice flour: 8 - 10%
- Flavour masker: 0.02 - 0.05%
- Meaty flavouring, preferably, bacon flavouring: 2 - 4%
- Salt: 0.5 - 0.7%
- Smoke: 0.5 - 0.7%
- Natural flavouring: 0.5 - 0.7%
- Sugar: 0.5 - 0.7%
- Water 70 - 75%
- Colouring agents: 0.5 - 1.0%
- Olive oil, preferably, extra virgin olive oil: 4 - 6%
- Binder, preferably, sodium alginate: 4 - 6%

The process of obtaining a meat solution of plant origin comprises the arrangement of all the components of the composition in a container, followed by grinding and stirring until the mixture is completely homogenised, resulting in a texture similar to that of whipped yoghurt.

Optionally, pea protein can be substituted by other compounds such as soya, insects, wheat, olive pits, etc., as a source of protein. Likewise, there are alternatives to sodium alginate, such as transglutaminase, gluten, or glutinous rice flour, which can be replaced by flour from a legume.

In turn, the fat solution is a solution of plant origin, for example, made of sunflower oil.

In a preferred embodiment where the meat part is a meat part of animal origin, the fat solution presents a composition comprising a formulation as shown below:
- Sunflower oil: 30-45%
- Water: 50 - 60%
- Binder, preferably, sodium alginate: 4 - 8%
- Inulin: 1 - 2.5%
- Natural flavouring: 0.5 - 1%

However, in an alternative embodiment, where the meat part is a meat part of plant origin, the composition of the fat solution preferably is:
- Sunflower oil: 30-45%
- Water: 50 - 60%
- Binder, preferably, sodium alginate: 4 - 8%
- Inulin: 1 - 2.5%
- Salt 0,3 - 0,7%
- Natural flavouring: 0.5 - 0.8%
- Liquid Smoke: 0.05 - 0.10%

To prepare the fat solution intended for an embodiment with a meat solution of alternative origin, all ingredients must be stirred until emulsified.

In an even more preferred embodiment, the body (4) of the food product may have a third type of coating, corresponding to a crustal solution layer (3), arranged on at least one of the large external surfaces. Said surfaces have a length, L, and a width, A.

The composition of this third solution is different from the other two. The crust solution has a composition preferably consisting of:
- Water: 85-97%
- Binder, preferably sodium alginate: 2 - 5%
- Natural flavouring: 0.3 - 1%

Said additional layer is configured to form a crispy structure when the slice of food product is fried, so that, as it has a high water content, the sodium alginate gelled mixture acquires a crispy texture when fried in oil, appearing similar to the rind of animal bacon. This layer may also have a variable thickness along the body.

In a second aspect, the invention relates to a method for obtaining said food product.

Said method comprises the following steps:
a) arranging a mould (11), preferably parallelepiped, with a base having a length, **L,** and a width, A;
b) depositing a variable thickness of at least one layer of meat solution (1) and at least one layer of fat solution (2) alternating from bottom to top along the height, h, partially or wholly occupying the area having a length, L, and width, A,
c) compacting the layered assembly (1, 2) into a multilayer body (4); and
d) ageing the body (4) by cooling, at a temperature between 2 - 8 °C for 8 - 24 hours, resulting in a food product having a laminable multilayer body (4).

Unlike other current solutions, the method according to the present invention provides a solution that improves the condition of the resulting food product by improving the similarity to the simulated product. In other words, the arrangement of the layers (1, 2) having a variable thickness makes it possible to obtain an irregular product, which results in a product that is more natural and closer to real bacon.

In this regard, in a preferred embodiment of the invention, the method comprises the following steps:
1- arranging a rectangular parallelepiped mould (11),
2- depositing a layer of meat solution (1) on the base of the mould (11), partially or completely covering the base of the mould (11),
3- adding a layer of fat solution (2) on top of the first layer of meat solution (1), covering the entire mould (11),
4- adding a second layer of meat solution (1) on top of the layer of fat solution (2), partially covering said second layer,
5- adding a layer of fat solution (2) on top of the second layer of meat solution (1), covering the entire mould (11),
6- adding a layer of meat solution (1) on top of the second layer of fat solution (2),
7- compacting the layered assembly (1, 2) forming a multilayer body (4) and
8- ageing the body (4) by cooling to gel the multilayer body (4) and forming the food product.

Once gelled, the multilayer body (4) can be laminated, cut, cooked, etc.

In an even more preferred embodiment, the method comprises an additional step, subsequently to obtaining the laminable multilayer body (4), i.e. after the body (4) has been compacted but without gelling, consisting of depositing a layer of crust solution (3) with a uniform or variable thickness onto one of the resulting bases on the gelled body (4). Next, the gelled body (4) and the crust solution layer (3) are cooled until the gelling of said additional layer (3).

In a preferred embodiment, the process comprises an additional mixing step prior to the gelling of the multilayer body (4). In other words, no stirring or churning takes place, but a smooth displacement or alteration of the order of the at least three layers (1, 2, 3) applied. As indicated above, this alteration favours an irregular appearance of the slices resulting from the lamination of the body (4), which allows the food product to look more natural.

Said mixture is carried out in a preferred embodiment, wherein the multilayer body (4) has at least three layers (1, 2). Said mixture is carried out with a linear controlled movement along the 3 axes (length, height and body width) at the same time, producing a wavy movement. In this regard, in those embodiments where the variability of the thickness of the layers (1, 2) is not sufficient to obtain a natural appearance, a mixing step according to the present invention makes it possible to bring greater irregularity to the appearance of the food product, giving it a more natural look.

In a third aspect of the invention, the invention relates to a system for carrying out the method of obtaining a food product, similar to a meat product, such as bacon.

The system for preparing said food product comprises two hoppers (5, 6), configured to receive and pour a layer of a meat solution (1) and a layer of fat solution (2), respectively. The layers (1, 2) are poured alternately into a mould (11), preferably on a conveyor belt (12). In this regard, automation of the pouring of the layers (1, 2) of the food product can be carried out.

Additionally, the system for preparing said food product may comprise a layer mixer (8). Due to this layer mixer (8) the mixing of layers (1, 2), in other words, the alteration of the order of the layers (1, 2) having a variable thickness, is achieved, giving the food product an irregular appearance, similar to the actual product.

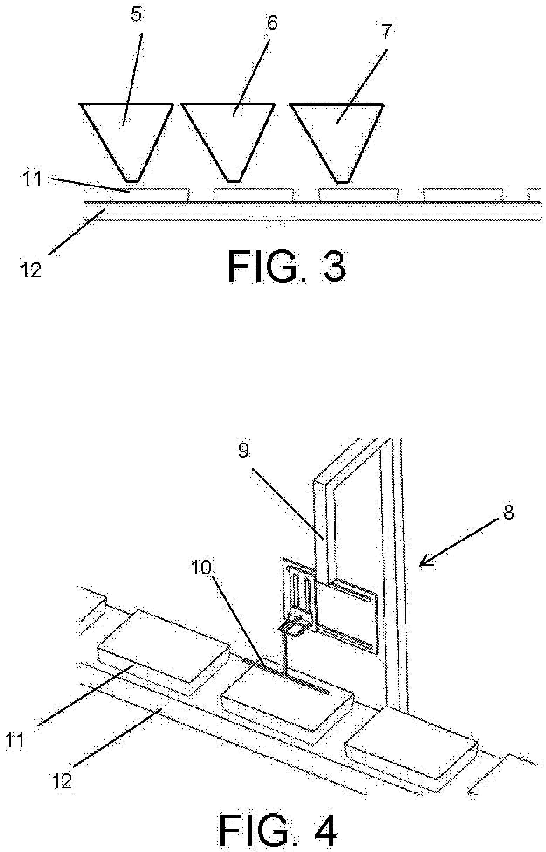

As shown in Figure 4, said layer mixer comprises an arm (9), preferably machined, connected to a head comprising a rod (10) arranged parallel to the layers (1, 2) of the product. Said rod (10) is movable along the three directions and covers the entire surface of the body of the food product to be formed. The rod is movable by means of a controlled linear displacement, so that it generates a mixture of the layers (1, 2), without achieving a stirring or churning thereof. Due to this mixer (8), the food product obtained during the process of the present invention has a more natural appearance, resembling actual bacon more closely compared to other current products. Said layer mixer may further comprise a control means for controlling the displacement of the mechanical arm automatically.

Therefore, as a result of the present invention, the result is an improved food product with improved taste, flavouring, appearance etc., characteristics, similar to a meat product, such as bacon.

## Claims

1. A food product **characterised in that** it comprises a substantially parallelepiped multilayer body, formed by two opposing bases with a length, L and width, A, and four side walls in opposing pairs and with a height, h, wherein the height, h, is less than the width, A; wherein said multilayer body comprises at least one layer of meat solution (1) and at least one layer of fat solution (2); the at least one layer of meat solution (1) and the at least one layer of fat solution (2) alternating from bottom to top along the height, h, and having a variable thickness along the body (4) of the food product, and wherein said body (4), once compacted and aged, is able to be laminated perpendicularly to the arrangement of said layers.

2. A food product according to claim 1, wherein the meat solution comprises the following formulation:
- Meat: 70 - 80%
- Water: 20 - 30%
- Binder: 2 - 3%
- Natural flavouring: 0.5 - 1%

3. A food product according to claim 2, wherein the fat solution comprises the following formulation:
- Sunflower oil: 30-45%
- Water: 50 - 60%
- Binder 4 - 8%
- Inulin: 1 - 2.5%
- Natural flavouring: 0.5 - 1%

4. A food product according to claim 1, wherein the meat solution comprises the following formulation:
- Source of protein: 2 - 4%
- Flour: 8 - 10%
- Flavour masker: 0.02 - 0.05%
- Meaty flavouring: 2 - 4%
- Salt: 0.5 - 0.7%
- Smoke: 0.5 - 0.7%
- Natural flavouring: 0.5 - 0.7%
- Sugar: 0.5 - 0.7%
- Water 70 - 75%
- Colouring agents: 0.5 - 1.0%
- Olive oil: 4 - 6%
- Binder: 4 - 6%

5. A food product according to claim 4, wherein the fat solution comprises a formulation as shown below:
- Sunflower oil: 30-45%
- Water: 50 - 60%
- Binder 4 - 8%
- Inulin: 1 - 2.5%
- Salt: 0.3 - 0.7%
- Natural flavouring: 0.5 - 0.8%
- Liquid Smoke: 0.05 - 0.10%

6. A food product according to any one of claims 1 to 5, wherein the multilayer body comprises layers (1 and 2) mixed according to a bacon-like appearance.

7. A food product according to any one of claims 1 to 6, wherein the product comprises an additional crust layer (3), arranged at one of the bases of the body (4).

8. A food product according to claim 7, wherein the crust layer (3) comprises a composition consisting of:
- Water: 85 - 97%
- Binder 2 - 5%
- Natural flavouring: 0.3 - 1%
and being configured to form a crisp structure when, in use, a slice of the food product is fried.

9. A method for preparing a food product according to any one of claims 1 to 8, **characterised in that** it comprises the following steps:
a) arranging a substantially parallelepiped-shaped mould (11) with a base having a length, L, and a width, A;
b) depositing a variable thickness of at least one layer of meat solution (1) and at least one layer of fat solution (2) alternating from bottom to top along the height, h, partially or wholly occupying an area having a length, L, and width, A, of the mould;
c) compacting the layered assembly into a multilayer body (4);
d) ageing the multilayer body (4) obtained by refrigeration at a temperature between 2 - 8 °C for 8 - 24 hours, obtaining by gelling a food product having a laminable multilayer body (4).

10. The method according to claim 9, wherein the process further comprises a step comprising depositing a layer of a crust layer (3) on the laminable multilayer body (4) obtained after cooling the multilayer body (4).

11. The method according to any one of claims 9 to 10, wherein the method comprises depositing at least 3 layers in step b.

12. The method according to any one of claims 9 to 11, wherein the method further comprises a linear controlled mixing step, prior to gelling the multilayer body (4).

13. A system for preparing a food product according to any one of claims 1 to 8, **characterised in that** it comprises:
a feeding means configured to receive and pour a raw material onto a substantially parallelepiped mould (11) with a base having a length, L, and a width, A, comprising
a) A first hopper (5) configured to pour a meat layer (1), and
b) A second hopper (6) configured to pour a fat layer (2); and
a cooling means configured to gel a multilayer body deposited in a substantially parallelepiped mould (11) with a base having a length, L, and a width, A,
and having control means configured to control the deposited thickness of each of the layers (1, 2) according to a variable thickness.

14. The system according to claim 13, wherein the feeding means further comprises a third hopper (7) configured to pour a crust layer (3).

15. The system according to any one of claims 13 to 14, wherein the system further comprises a layer mixer (8), wherein said layer mixer (8) comprises a mechanical arm (9) comprising a rod (10) arranged parallel to the layers (1, 2) to be mixed, said rod (10) being movable by means of a controlled linear displacement.
